# EUROPÄISCHE PATENTSCHRIFT

(11) **EP 2 556 008 B1**
(45) Veröffentlichungstag und Bekanntmachung des Hinweises auf die Patenterteilung: **22.04.2015**
(21) Anmeldenummer: 12700685.6
(22) Anmeldetag: 18.01.2012
(51) Int. Cl.: B66B 19/00, E04G 21/24, E04H 12/34, B66B 17/10, F03D 11/00, B28B 23/00, B66C 1/10, B66B 9/16, F03D 11/04, F03D 1/00, F02C 6/18

(54) **VORRICHTUNG UND VERFAHREN ZUM ERRICHTEN EINES TURMS EINER WINDENERGIEANLAGE**
DEVICE AND METHOD FOR ERECTING A TOWER FOR A WIND ENERGY PLANT
DISPOSITIF ET PROCÉDÉ POUR ÉRIGER UN MÂT D'UNE ÉOLIENNE

(30) Priorität: 26.01.2011 DE 102011003164
(43) Veröffentlichungstag der Anmeldung: 13.02.2013
(60) Teilanmeldung: 14180212.4
(73) Patentinhaber: Wobben Properties GmbH, 26605 Aurich (DE)
(72) Erfinder: VAN OHLEN, Hermann, 26529 Upgant-Schott (DE); HÖLSCHER, Norbert, 26607 Aurich (DE); HONCZEK, Michael, 26632 Ihlow (DE); KAPITZA, Jan, 26629 Grossefehn (DE); BUCK, Ralf, 26736 Krummhörn (DE)
(74) Vertreter: Eisenführ Speiser
(86) Internationale Anmeldenummer: PCT/EP2012/050729
(87) Internationale Veröffentlichungsnummer: WO 2012/101023

(56) Entgegenhaltungen:
- WO-A-2004/038108
- WO-A2-2010/147459
- WO-A2-2011/050882
- DE-A1- 10 104 351
- DE-A1-102009 061 027
- DE-U1- 8 424 193
- GB-A- 1 019 858
- US-A1- 2009 107 062
- US-A1- 2009 284 012

## Beschreibung

Die Erfindung betrifft die vorliegende Erfindung eine Hebevorrichtung zum Heben eines Turmsegmentes eines Betonturms einer Windenergieanlage mittels eines Krans gemäß dem Oberbegriff des Anspruchs 1. Eine solche Hebevorrichtung ist z.B. durch US 2009/107062 bekannt. Die Erfindung betrifft auch ein Verfahren zum Heben und Absenken eines Turmsegmentes eines Betonturms einer Windenergieanlage.

Verfahren zum Errichten eines Turms einer Windenergieanlage, insbesondere eines Betonturms, sind grundsätzlich bekannt. Zunächst wird ein Betonfundament vorgesehen. Ein Betonturm in Fertigbauweise ist aus mehreren Turmsegmenten zusammengesetzt. Solche Turmsegmente können als rohrförmige und damit zylinderähnliche Elemente, nämlich im Gegensatz zu einem Zylinder mit leicht konischer Form, vorgesehen sein. Bei größeren Turmdurchmessern kommt auch eine Unterteilung in Umfangsrichtung in Betracht, so dass beispielsweise zwei im Querschnitt etwa halbkreisförmige Element oder andere teilkreisförmige Segmente zusammengesetzt werden.

Zunächst werden ein Turmsegment oder mehrere Turmsegmente als erste unterste Turmebene auf dem Fundament aufgesetzt. Es ist wichtig, dass diese erste Ebene sehr sorgfältig ausgerichtet, nämlich ausnivelliert wird. Hierfür wird dieses erste Segment bzw.

mehrere Segmente genau ausnivelliert und in dieser ausnivellierten Position zunächst zumindest provisorisch fixiert, um dann zwischen Fundament und diesem untersten Turmsegment bzw. diesen untersten Turmsegmenten eine Ausgleichsmasse einzufügen, die schließlich aushärtet und diese nivellierte Ausrichtung fixiert.

Problematisch hierbei ist, dass die Aushärtung der Ausgleichsmasse eine gewisse Mindesttemperatur benötigt. Bei niedrigen Außentemperaturen um den Gefrierpunkt kann sich das Aushärten signifikant verlängern oder vollständig scheitern. Dies führt zum einen zu der Gefahr einer schlecht oder unvollständig ausgehärteten Ausgleichsmasse. Andererseits können durch das Abwarten einer verlängerten Aushärtedauer längere Standzeiten für beispielsweise einen zur Installation benötigten Kran resultieren. Ein solcher Kran, der bereits das/die erste(n) Turmsegment(e) auf das Fundament gehoben hat, bleibt für die Dauer des Aushärtens dieser Ausgleichsmasse ungenutzt. Es ergeben sich somit kostspielige zusätzliche Standzeiten des Krans.

Im Weiteren wird der Turm sukzessive aufgebaut, indem weitere Turmsegmente auf den bis dahin aufgebauten Teilturm aufgesetzt werden. Die hierfür notwendigen Arbeiten entstehen somit zunehmend in höherer Höhe. Im Bereich der obersten Ebene des jeweils fertiggestellten Turmabschnitts wird somit regelmäßig ein Gerüst oder Arbeitsplattform angeordnet, auf dem Arbeiter des Aufbauteams das Aufsetzen eines neuen Turmsegmentes kontrollieren können. Hierbei muss insbesondere kontrolliert werden, dass das jeweilige neue Turmsegment an exakt der richtigen, vorgesehenen Position angeordnet wird. Mittels eines Kranes wird so jedes Turmsegment sukzessive etwa an seinen Platz gehoben und ein Kranführer führt eine Feinpositionierung des betreffenden Turmsegmentes aus. Die genaue Positionierung jedes Turmsegmentes wird dann von den Arbeitern des Aufbauteams auf der besagten Arbeitsplattform manuell, also mit Muskelkraft vorgenommen. Insbesondere muss das betreffende Turmsegment regelmäßig in die korrekte Position gedreht werden. Das Aufbaupersonal hält das so per Hand ausgerichtete Turmsegment in der korrekten Position und der Kranführer senkt das Turmsegment dann langsam ab, während das Aufbauteam dafür sorgt, dass die ausgerichtete Position beibehalten wird. Es ist dabei zu berücksichtigen, dass ein solches Turmsegment etwa 5 bis 120 t wiegen kann. Es muss somit trotz Einsatz großer Muskelkräfte eine sehr feine Positionierung vorgenommen werden.

Dieses Verfahren zum Aufsetzen eines weiteren Turmsegmentes ist somit kompliziert, zeit- und arbeitsaufwändig und weist eine gewisse Fehleranfälligkeit. Zudem besteht die Gefahr von Verletzungen für die Arbeiter vor Ort, insbesondere die Gefahr von Quetschungen.

Ist das neue Turmsegment auf dem bis dahin errichteten Turm angeordnet, muss das Turmsegment von einer Traverse, mit der der Kran das Turmsegment gehoben hat, getrennt werden. Hierzu können Tragschlaufen, wie zu Schlaufen geformte Stahlseile an dem Turmsegment befestigt sein. Die Traverse wird dann von diesen Schlaufen gelöst, wie beispielsweise ausgehakt und die Stahlseilschlaufen als solche werden dann manuell von den Arbeitern auf der Arbeitsplattform von dem aufgesetzten Turmsegment entfernt. Auch dies ist aufwändig und erfordert einen recht hohen Personalaufwand einschließlich entsprechender Arbeitsplattform in der Höhe des bis dahin fertiggestellten Turms.

Ganz allgemein sei auf die Dokumente US 3,074,564 A, DE 10 2009 023 538 A1 und DE 20 2010 000 868 U1 verwiesen.

Der vorliegenden Erfindung liegt somit die Aufgabe zugrunde, wenigstens eines der oben aufgezeigten Probleme zu beheben oder zu verringern, insbesondere den Aufbau eines Turms einer Windenergieanlage effizienter zu gestalten, insbesondere den Aufbau eines Betonturms. Zumindest soll eine alternative Lösung vorgeschlagen werden.

Erfindungsgemäß wird eine Hebevorrichtung vorgeschlagen, insbesondere Traverse, zum Heben eines Turmsegmentes eines Betonturms einer Windenergieanlage mittels eines Krans gemäß Anspruch 1. Eine solche Hebevorrichtung ist somit als Tragkonstruktion, insbesondere Traverse ausgebildet, die das Turmsegment heben soll und dabei selbst von einem Kran gehoben wird, insbesondere also an einem Kranseil befestigt ist. Diese Hebevorrichtung bzw. Traverse weist wenigstens ein Befestigungselement zum Befestigen des Turmsegmentes an sich selbst auf. Dies kann beispielsweise ein Haken sein, der in eine Schlaufe eingreifen soll, oder ein Querbolzen zwischen zwei Aufnahmeflanken. Grundsätzlich sind zumindest zwei Befestigungselemente, vorzugsweise vier Befestigungselemente vorgesehen, um an mehreren Stellen mit dem Turmsegment verbunden zu sein, um dadurch das Turmsegment beim Heben stabilisieren zu können. Grundsätzlich kann ein einziges Befestigungselement ausreichend sein, zum Verteilen der Gewichtskräfte und Vorsehen der Stabilisierung sind jedoch häufig mehrere Befestigungselement vorzusehen.

Weiterhin ist eine Auslösevorrichtung vorgesehen, die eine Verbindung zwischen der Hebevorrichtung und dem Turmsegment lösen kann. Insbesondere soll eine automatische oder teilautomatische bzw. ferngesteuerte Auslösung bzw. Trennung einer Verbindung oder ein Lösen einer Verbindung durch die Auslösevorrichtung vorgesehen sein. So kann diese Auslösevorrichtung beispielsweise über eine Funkfernsteuerung betätigt werden. Das tatsächliche Lösen wird aber von der Auslösevorrichtung durchgeführt. Somit soll vermieden werden, dass dort, wo das Lösen der Verbindung vorgenommen werden soll, Arbeiter unmittelbar manuelle Arbeit zum Lösen der Verbindung verrichten müssen.

Anstelle einer ferngesteuerten Lösung der Verbindung kommt auch eine situationsbedingte Lösung der Verbindung in Betracht, wie beispielsweise, dass durch das Absetzen des Turmsegmentes ein Lösen der Verbindung zwischen Hebevorrichtung und Turmsegment durchgeführt oder gestartet wird.

Vorzugsweise ist die Hebevorrichtung dazu vorbereitet, die Verbindung zwischen der Hebevorrichtung und dem Turmsegment so rückstandsfrei zu lösen, dass auf dem Turmsegment ein weiteres Turmsegment bestimmungsgemäß angeordnet werden kann. Mit anderen Worten steht an einer Oberseite des Turmsegmentes nach dem Lösen der Verbindung kein Element hervor, das dem Aufsetzen eines weiteren Turmsegmentes auf dieser Oberseite im Wege wäre. Insoweit eine korrespondierende Ausnehmung oder andere Anpassung des aufzusetzenden weiteren Turmsegmentes vorhanden ist, kann ein Element an der Oberseite des in dieser Konstellation unteren Turmsegmentes verbleiben. Wichtig bei dieser Ausgestaltung ist, dass nach dem Lösen einer Verbindung mittels der Hebevorrichtung keine weiteren manuellen Tätigkeiten diesbezüglich an dem Turmsegment nötig sind.

Beispielsweise soll diese Ausgestaltung vermeiden, dass eine Hebevorrichtung lediglich die Verbindung zu einer oder mehreren Tragösen oder Tragschlaufen des Turmsegmentes löst, also ausgehakt wird, die verbleibenden Tragösen oder Tragschlaufen aber manuell noch entfernt werden müssen.

Diese Ausführungsform kann dabei auch den Fall beinhalten, dass beim Lösen der Verbindung zwischen der Hebevorrichtung und dem Turmsegment auch ein Hilfsmittel wie eine Tragöse oder Tragschlaufe oder dergleichen von dem Turmsegment gelöst wird. Dieses von dem Turmsegment gelöste Hilfsmittel muss nicht Teil der Hebevorrichtung sein.

Günstig ist es, wenn die Hebevorrichtung, insbesondere die Auslösevorrichtung dazu vorbereitet ist, ein Verbindungselement, insbesondere eine in das Turmsegment eingeschraubte Öse oder Stahlseilschlaufe aus dem Turmsegment zu lösen, insbesondere herauszuschrauben. Diese Ausführung geht von der Verwendung eines Verbindungselementes bzw. mehrerer Verbindungselemente aus, die an dem zu hebenden Turmsegment befestigt, insbesondere hineingeschraubt sind. Dem liegt somit ein Verbindungselement wie eine Öse, eine Stahlseilschlaufe, ein Ring oder dergleichen zugrunde, dass zudem über einen Gewindeabschnitt verfügt, um in eine gewindebehaftete Öffnung, insbesondere ein gewindebehaftetes Sackloch eingeschraubt zu werden. In die Öffnung der Öse, Schlaufe, Ring oder dergleichen kann die Hebevorrichtung mittels eines Hakens oder anderem Eingreifelement eingreifen, um das Turmsegment zu heben. Würde nach dem endgültigen Absetzen des Turmsegmentes lediglich die Hebevorrichtung aus diesem Verbindungselement gelöst, verbliebe das Verbindungselement und stände dem Aufsetzen eines weiteren Turmsegmentes auf dieses Turmsegment entgegen. Die Auslösevorrichtung ist gemäß dieser Ausführungsform somit so gestaltet, dass sie auch das Verbindungselement aus dem Turmsegment lösen kann. Für das bevorzugte Beispiel eingeschraubter Verbindungselemente werden diese aus dem Turmsegment herausgeschraubt. Dies kann mittels eines Motors, insbesondere Elektromotors für die Hebevorrichtung oder für jede einzelne Auslösevorrichtung erfolgen. Der Motor führt somit eine Drehung des Eingreifmittels aus, das in das Verbindungselement eingreift und diese Drehbewegung wird auf das Verbindungselement übertragen und schraubt dieses Verbindungselement dadurch aus dem Turmsegment heraus. Es bleibt lediglich eine Öffnung in dem Turmsegment zurück, die dem Aufsetzen eines weiteren Turmsegmentes aber nicht entgegensteht.

Grundsätzlich können auch andere Verbindungen zwischen dem Verbindungselement und dem Turmsegment vorgesehen sein, die eine lösbare Verbindung, wie z.B. eine Arretiervorrichtung beinhalten.

Bevorzugt ist jedes Befestigungselement dazu vorbereitet ist, jeweils mit einer der Stahlseilschlaufen oder anderem Verbindungselement verbunden zu werden und wobei jedes Befestigungsmittel mit einer der Ablösevorrichtungen versehen ist, um die mit dem jeweiligen Befestigungsmittel verbundene Stahlseilschlaufe oder anderes Verbindungselement aus dem Turmsegment zu schrauben. Entsprechend kann jedes Befestigungsmittel einzeln das mit ihm verbundene Verbindungselement aus dem Turmsegment herausschrauben. Hierdurch wird eine Entkopplung der einzelnen Auslösevorrichtungen und Auslösevorgänge erreicht. Insbesondere bei Verwendung von Elektromotoren ist eine einfache und sachgerechte Aufteilung möglich.

Vorzugsweise sind wenigstens zwei Befestigungsmittel vorgesehen, die jeweils lösbar mit einer Stahlseilschlaufe verbunden werden können. Hierzu kann insbesondere ein tragender Querbolzen zum Einschieben in eine Stahlseilschlaufe oder ein Hakenabschnitt zum Einhaken in eine Stahlseilschlaufe vorgesehen sein, die vorzugsweise jeweils durch ein Sicherheitsmittel gesichert sind, das ein unbeabsichtigtes Lösen des Verbindungselementes von dem Befestigungsmittel verhindert. Dabei liegt auch der Gedanke zugrunde, dass nach dem Lösen der Verbindungselemente aus dem Turmsegment diese noch mittels der Hebevorrichtung zum Boden der Baustelle am Aufstellungsort gebracht werden müssen und auch hierbei nicht herunterfallen dürfen. Ist die Hebevorrichtung einschließlich dieser Verbindungselemente zum Boden herabgelassen worden, so können dort die Verbindungselemente aus den Befestigungselementen entfernt werden.

Vorzugsweise können alle oder einige der Befestigungsmittel und vorzugsweise einschließlich der Lösevorrichtung in ihrer Position an der Hebevorrichtung verändert werden, um an unterschiedlich große zu hebende Turmsegmente angepasst zu werden. Hierdurch kann der apparative Aufwand beim Errichten eines Windenergieanlagenturms diesbezüglich gering gehalten werden, obwohl sich die Turmsegmente mit zunehmender Höhe eines sich nach oben verjüngenden Windenergieanlagenturms in ihrer Größe und/oder Art ändern.

Gemäß einer nicht beanspruchten Ausführungsform wird beispielhaft ein Zentrierdorn angeführt. Ein solcher Zentrierdorn ist zum Befestigen an einem ersten Turmsegment eines Betonturms einer Windenergieanlage vorgesehen und zum Führen eines zweiten Turmsegmentes des Betonturms beim Absenken des zweiten Turmsegmentes auf das erste Turmsegment. Hierzu weist der Zentrierdorn einen Befestigungsabschnitt zum Befestigen an dem ersten Turmsegment auf, sowie einen Führungsabschnitt zum Führen des zweiten Turmsegmentes. Der Zentrierdorn wird also an dem ersten und damit unteren Turmsegment befestigt. Der Führungsabschnitt ist entsprechend zum Führen des zweiten und damit oberen Turmsegmentes beim Absenken vorbereitet. Ein Windenergieanlagenturm in Fertigbauweise wird aus einer Vielzahl von Turmsegmenten zusammengesetzt, die insbesondere aufeinander aufgesetzt werden. Um insgesamt einen senkrechten und stabilen Turm zu erhalten, müssen alle Segmente sauber aufeinander aufgesetzt werden. Hierzu leistet der vorgeschlagene Zentrierdorn einen Beitrag und erreicht das möglichst präzise Aufeinandersetzen des zweiten Turmsegmentes auf das erste, also des oberen Turmsegmentes auf das untere.

Beispielsweise weist der Zentrierdorn wenigstens eines der folgenden Merkmale bzw. Eigenschaften auf. Vorzugsweise ist der Befestigungsabschnitt des Zentrierdorns mit einem Außengewinde, insbesondere einem Metallgewinde, vorgesehen zum Einschrauben in das erste Turmsegment. Somit ist an dem Turmsegment ein entsprechendes Gewinde zum Einschrauben des Zentrierdorns vorzusehen, das vorteilhaft einem oben beschriebenen Gewinde bzw. Sackloch mit Gewinde zum Aufnehmen einer Tragschlaufe oder anderem Tragmittel nach Art und Größe entspricht, insbesondere damit identisch ist. Der Zentrierdorn kann dann an der Oberseite des ersten Turmsegmentes in das Gewinde eingeschraubt und so befestigt werden. Bei Verwendung eines entsprechenden Gewindes wird hierdurch auch eine genaue Positionierung des Zentrierdorns in dem ersten Turmsegment erreicht.

In einem weiteren Beispiel ist der Führungsabschnitt konisch ausgebildet und verjüngt sich in der zum Befestigungsabschnitt abgewandten Seite. Ist der Zentrierdorn also bestimmungsgemäß oben in das erste Turmsegment eingesetzt, insbesondere eingeschraubt, so verjüngt sich der Führungsabschnitt nach oben. Der Führungsabschnitt kann somit beispielsweise einem Kegelabschnitt entsprechen.

Der Führungsabschnitt kann vorzugsweise aus Kunststoff gefertigt sein. Hierdurch ist eine einfache Ausgestaltung des Zentrierdorns möglich und insbesondere kann seine Form auf einfache Weise hergestellt und reproduziert werden. Insbesondere ist der Führungsabschnitt des Zentrierdorns dazu vorgesehen, in eine korrespondierende Öffnung an der Unterseite des zweiten, also oberen Turmsegmentes, einzugreifen.

Günstig ist es, wenn der Befestigungsabschnitt und der Führungsabschnitt konzentrisch um eine gemeinsame Achse ausgebildet sind. Hierdurch ist eine einfache Herstellung, platzsparende Lagerung und Transport möglich. Insbesondere aber vereinfacht dies die Handhabung und gewährleistet möglichst gute Handhabungseigenschaften und insbesondere Eigenschaften zur Führung des oberen Turmsegmentes beim Absenken.

Weiterhin wird ein Zentrierdornpaar bestehend aus zwei unterschiedlich großen Zentrierdornen beispielhaft vorgeschlagen. Dabei können insbesondere die Befestigungsabschnitte, also insbesondere ein Befestigungsabschnitt mit Gewinde die gleiche Größe aufweisen, wohingegen die Führungsabschnitte unterschiedlich groß sind. Bei Anordnung dieser beiden Zentrierdorne, also dieses Zentrierdornpaars an der Oberseite des ersten Turmsegments, also des unteren Turmsegmentes, ragen diese beiden Zentrierdorne somit unterschiedlich hoch über die Oberseite dieses ersten Turmsegmentes hinaus. Zum Ausrichten eines zweiten Turmsegmentes, das auf dem ersten Turmsegment aufgesetzt werden soll, wird das zweite Turmsegment zunächst mittels eines Kranes in eine schwebende Position etwa oberhalb des ersten Turmsegments befördert. Nun kann das zweite Turmsegment langsam so abgesetzt werden, dass eine Zentrierhülse in dem zweiten Turmsegment mit einer nach unten weisenden Öffnung sich oberhalb des größeren Zentrierdorns befindet und soweit abgesenkt wird, dass dieser größere Zentrierdorn zu einem Teil in die korrespondierende Zentrierhülse hineinreicht. Dabei wird dieses zweite Turmsegment nur so weit abgesenkt, dass der kleinere Zentrierdorn, also der Zentrierdorn mit dem kürzeren Führungsabschnitt noch frei ist. Die Unterseite des zweiten Turmsegmentes befindet sich also noch kurz oberhalb der obersten Spitze dieses kleineren Zentrierdorns. Durch den teilweisen Eingriff des größeren Zentrierdorns in seine entsprechende Zentrierhülse kann das zweite Turmsegment nun in eben diesem Bereich um den großen Zentrierdorn geschwenkt werden, bis eine weitere Zentrierhülse oberhalb des kleineren Zentrierdorns angeordnet ist. Nun kann das zweite Turmsegment weiter abgesenkt werden, so dass auch der kleinere Zentrierdorn in seine korrespondierende Hülse eingreift. Nun sind wenigstens zwei Zentrierdorne jeweils in einer Zentrierhülse teilweise eingeführt, nämlich zumindest der oben beschriebene größere und der oben beschriebene kleinere Zentrierdorn. Dieses zweite Turmsegment kann nun weiter abgesenkt werden und dabei übernehmen die vorzugsweise konischen Zentrierdorne die Positionierung des Turmsegmentes.

In einem nicht beanspruchten Beispiel wird somit auch eine Zentrierhülse zum Einbetonieren in ein zweites Turmsegment eines Betonturms einer Windenergieanlage vorgeschlagen. Eine solche Zentrierhülse wird wie oben beschrieben zum Führen des zweiten Turmsegmentes beim Absenken auf ein erstes Turmsegment verwendet und soll dabei mit einem beschriebenen Zentrierdorn zusammenwirken. Eine solche Zentrierhülse weist zumindest einen Hohlraum mit einer Innenkontur zum Aufnehmen eines konischen Zentrierdorns auf und eine Öffnung zum Einführen eines solchen konischen Zentrierdorns. Der Hohlraum und die Öffnung sind dabei insbesondere so ausgestaltet, also sowohl nach Form und Dimensionierung, dass sie mit einem entsprechenden Zentrierdorn zusammenwirken können. Mit anderen Worten sollte der entsprechende Zentrierdorn möglichst passgenau an die Zentrierhülse, also den Hohlraum der Zentrierhülse angepasst sein, dass er beim Einführen in eine Position geleitet wird.

Die Zentrierhülse weist eine Außenkontur zum Halten der Zentrierhülse in dem Beton des Turmsegmentes auf. Insoweit ist es vorteilhaft, wenn die Außenkontur beispielsweise einen Vorsprung, wie beispielsweise einen umlaufenden Vorsprung aufweist, um ein Herausfallen der Zentrierhülse aus dem ausgehärteten Beton zu vermeiden. Je nach Randbedingungen wie Rauigkeit des Materials der Zentrierhülse und gegebenenfalls weiterer Haltemittel kann es ausreichend sein, wenn die Außenkontur im Wesentlichen der Innenkontur des Hohlraums entspricht.

In einer beispielhaften Ausführung ist die Zentrierhülse im Wesentlichen aus Kunststoff gefertigt. Das wesentliche bezieht sich darauf, dass als Material für die Zentrierhülse Kunststoff verwendet wird, gegebenenfalls aber Halteelemente, wie ein Haltehaken oder dergleichen beispielsweise aus Metall oder einem anderen Material ergänzt sein können. Insbesondere die Ausgestaltung des Hohlraums ist auf einfache Art und Weise mittels eines Kunststoffmaterials beispielsweise im Spritzkursverfahren zu realisieren.

Beispielsweise ist an der Zentrierhülse zudem ein Positionierabschnitt vorgesehen, der zum Positionieren und/oder Befestigen der Zentrierhülse in einer Betonform oder auf einer in dem Zusammenhang verwendeten Auflagefläche einer Betonform ausgebildet ist. Durch diesen Positionierabschnitt wird die Zentrierhülse möglichst exakt zentriert und anschließend erfolgt das Gießen des Betonsegmentes. Dabei muss gewährleistet sein, dass das Gießen des Betons in die entsprechende Segmentform die Zentrierhülse bzw. die Zentrierhülsen in ihrer Position und auch Ausrichtung belässt und nicht verschiebt oder anderweitig bewegt. Entsprechend wird die Zentrierhülse dann in das Turmsegment mit eingegossen. Dabei sollte die Öffnung nicht verschlossen werden, oder ein solcher Verschluss sollte so unwesentlich sein, dass er auf einfache Weise nach dem Aushärten wieder entfernt werden kann. Hierdurch entsteht entsprechend auf einfache Weise ein Turmsegment mit wenigstens einer auf einfache Weise eingearbeiteten Zentrierhülse und damit eine klar definierte Zentrierausnehmung, die mit einem Zentrierdorn zusammenwirken kann.

Entsprechend wird ein solches Turmsegment eines Betonturms mit einer darin einbetonierten Zentrierhülse beispielhaft vorgeschlagen.

Vorteilhaft ist somit, einen Zentriersatz vorzusehen, der wenigstens einen Zentrierdorn und eine daran angepasste Zentrierhülse aufweist.

Gemäß einer nicht beanspruchten Ausführungsform wird zudem eine Arbeitsbühnenvorrichtung zum Arbeiten in veränderlicher Höhe in einem Turm oder Turmabschnitt einer Windenergieanlage vorgeschlagen. Diese Arbeitsbühnenvorrichtung ist zum Aufbauen eines Turmes vorgesehen und insoweit zur Verwendung in einem teilweise fertiggestellten Turm, der auch als Turmabschnitt bezeichnet werden kann. Die Arbeitsbühnenvorrichtung umfasst einen Arbeitskorb zum Aufnehmen einer Person zum Arbeiten in dem Turm in veränderlicher Höhe. Der Arbeitskorb ist insoweit dazu vorbereitet, insbesondere jeweils im Bereich des obersten zurzeit angeordneten Turmabschnitts bereitgestellt zu werden. Hierbei wird von einem Turm einer Windenergieanlage ausgegangen, der segmentweise zusammengesetzt wird, also insbesondere durch übereinander Anordnen von Turmsegmenten. Dies können vorzugsweise Turmsegmente eines Betonturms sein, also Betonsegmente. Eine Anwendung in einem Stahlturm kommt gleichwohl auch in Betracht.

Die Arbeitsbühnenvorrichtung weist zudem einen Befestigungsabschnitt zum unfallsicheren Befestigen des Arbeitskorbs an einer mit einer Sicherheitsschiene versehenen Turmleiter auf. Der Befestigungsabschnitt muss also dazu ausgebildet sein, nicht nur den Arbeitskorb quasi beliebig an der Turmleiter zu befestigen, sondern in einer Art und Weise, dass unter Berücksichtigung von Unfallverhütungsvorschriften wenigstens ein Arbeiter darin sicher in der jeweiligen Höhe im Turm arbeiten kann und darf. Die Turmleiter, an der dieser Sicherheitskorb unfallsicher zu befestigen ist, weist eine Sicherheitsschiene auf in der ein Arbeiter im Turm sein Sicherheitsgeschirr bestimmungsgemäß und vorschriftsgemäß sichern kann. Hieran muss der Befestigungsabschnitt des Arbeitskorbs angepasst sein.

Gemäß einem Beispiel weist der Arbeitskorb einen Bodenabschnitt auf und der Bodenabschnitt kann so geöffnet werden, dass eine Bodenöffnung entsteht, durch die eine erwachsene Person, nämlich eine Person eines Aufbauteams des Windenergieanlagenturms, den Arbeitskorb nach unten verlassen kann. Entsprechend kann der Arbeitskorb nach unten geöffnet werden und das Mitglied des Aufbauteams kann den Arbeitskorb insbesondere über die Turmleiter, an der der Arbeitskorb befestigt ist, nach unten verlassen.

Beispielsweise ist die Bodenöffnung so ausgebildet, dass die Person beim Verlassen des Arbeitskorbes durch die Bodenöffnung, wenn der Arbeitskorb an der Turmleiter befestigt ist, mit einem Sicherheitsgeschirr über einen Sicherheitsschlitten an der Sicherheitsschiene durchgängig gesichert bleiben kann, insbesondere dass die Person den Sicherheitsschlitten bei Verlassen des Arbeitskorbes in der Schiene führen kann. Mit anderen Worten wird beim Öffnen der Bodenöffnung die Sicherheitsschiene insoweit vollständig freigegeben. Die Person, die den Arbeitskorb nach unten verlassen will, kann sich somit mittels des Sicherheitsgeschirrs und dem entsprechenden Sicherheitsschlitten an der Sicherheitsschiene schon im Korb sichern, was ohnehin für den gesamten Aufenthalt im Arbeitskorb vorzusehen ist. Dann kann die Öffnung geöffnet werden, wobei die Person ununterbrochen gesichert bleibt. Schließlich kann die Person an der Turmleiter einfach nach unten aus dem Arbeitskorb die Leiter heruntersteigen. Der Sicherheitsschlitten wird dabei in ansonsten bekannter Weise in der Sicherheitsschiene geführt und es entsteht hierbei zu keinem Zeitpunkt eine für die Person ungesicherte Situation. Die Person ist während des gesamten Vorgangs durchgehend gesichert.

Gemäß einem weiteren Beispiel wird vorgeschlagen, die Arbeitsbühnenvorrichtung mit einem Hebemittel zu versehen. Dieses Hebemittel ist zum Befestigen an der Turmleiter vorgesehen und zum Hochziehen des Arbeitskorbes entlang der mit der Sicherheitsschiene versehenen Turmleiter aus einer ersten Arbeitsposition in eine höher gelegene zweite Arbeitsposition.

Beispielsweise weist das Hebemittel einen Flaschenzug oder zumindest ein Umlenkmittel zum Umlenken eines Tragseils auf, wobei der Flaschenzug bzw. das Umlenkmittel zum Befestigen an der Turmleiter oder Sicherheitsschiene vorbereitet ist. Hierdurch ist es möglich, den Flaschenzug bzw. das Umlenkmittel oberhalb des Arbeitskorbes an derselben Turmleiter bzw. der damit verbundenen Sicherheitsschiene zu befestigen. Ein Ende eines Tragseils bzw. ein Ende des Flaschenzuges wird dann an einer bzw. mehreren entsprechenden Stellen des Arbeitskorbes befestigt und das andere Ende des Seils reicht zu der Person, die das Hebemittel betätigen soll. Hierbei kann diese Person zuvor den Arbeitskorb durch eine entsprechende Öffnung nach unten verlassen haben und unterhalb des Arbeitskorbes stehen. Das Seil kann durch diese Öffnung im Boden des Arbeitskorbes zu der Person reichen. Diese Person kann nun an dem Seil den Arbeitskorb nach oben in eine höher gelegene Arbeitsposition ziehen. Dies ist insbesondere vorteilhaft beim Aufbauen eines Windenergieanlagenturmes aus einzelnen Turmsegmenten, indem auf die beschriebene Art und Weise der Arbeitskorb jeweils sukzessive in den Bereich des oberen Turmsegmentes, insbesondere in die Nähe der Oberkante des obersten Turmsegmentes bewegt wird, weil dort Arbeiten auszuführen sind, wenn dort das nächste Turmsegment aufgesetzt werden soll. Vorzugsweise werden hierbei Turmsegmente mit vormontierten Turmleiterabschnitten verwendet.

Gemäß einer weiteren nicht beanspruchten Ausführungsform wird zudem eine Wärmvorrichtung zum Wärmen eines ringförmig umlaufenden Stoßbereichs zwischen einem rohrförmigen Turmsegment mit umlaufender Segmentwand und einem Turmfundament einer Windenergieanlage beim Aufbau der Windenergieanlage angeführt. Diese Wärmvorrichtung weist ein oder mehrere Abdeckplanen zum Abdecken des Stoßbereichs auf. Weiterhin weist sie eines oder mehrere ringförmige Traggerüste zum Tragen der bzw. einer der Abdeckplatten auf. Dabei ist das eine oder die mehreren Traggerüste so ausgebildet, dass ausreichend Raum für wenigstens eine erwachsene Person zwischen dem Stoßbereich und der auf das Traggerüst aufgelegten Abdeckplane ist.

Dieser Wärmvorrichtung liegt die Erkenntnis zugrunde, dass zum Ausrichten eines Turmsegmentes auf einem Turmfundament eine Ausgleichsmasse angeordnet werden kann, die insbesondere bei frostigen Temperaturen, also insbesondere Temperaturen um und insbesondere unter dem Gefrierpunkt schlecht, langsam oder gar nicht aushärtet. Die Errichtung von Türmen von Windenergieanlagen in kalten Gebieten und/oder zu kalten Jahreszeiten ist daher problematisch, kann zumindest zu Verzögerungen in der Errichtung des Windenergieanlagenturmes führen. Unter der Berücksichtigung, dass bereits zum Aufstellen des ersten Turmsegmentes ein entsprechender Kran notwendig ist, bedeutet schon eine Verzögerung des Aufbaus eine Leerlaufzeit des bestellten Krans mit den damit verbundenen Kosten. Durch die Verwendung der Wärmevorrichtung soll somit erreicht werden, trotz tiefen Umgebungstemperaturen die Temperatur in dem Bereich, in dem das Nivellieren mittels Ausgleichsmasse vorgenommen wird, zumindest insoweit zu erhöhen, als dass das Aushärten der Ausgleichsmasse nicht oder nicht wesentlich beeinträchtigt ist.

Die hierfür vorgeschlagene Wärmvorrichtung schafft im Wesentlichen die Anordnung einer Wärmeabdeckung um besagten zu wärmenden Bereich herum. Hierfür wird eine an den Turm angelehnte oder daran befestigte Haltevorrichtung vorgeschlagen, auf der eine entsprechende Abdeckplane angeordnet wird. Durch die Verwendung des Traggerüstes bzw. der Traggerüste kann die Abdeckung im Grunde so weit von der zu wärmenden Stelle weggehalten werden, dass ausreichend Raum für ein oder mehrere Personen zum Arbeiten entsteht. Die Traggerüste sind hierfür ringförmig ausgestaltet. Unter diese ringförmige Ausgestaltung fällt dabei nicht allein eine ringförmige Form im mathematischen Sinne eines Kreises, sondern auch polygonförmige Konstruktionen, die an die runde Form eines Windenergieanlagenturms bzw. Turmsegments angepasst sind.

Beispielsweise ist eine innere Teilabdeckvorrichtung zum Anordnen im Inneren des Turmsegmentes vorgesehen, die eine insbesondere eigenständige Konstruktion aus Traggerüst oder Traggerüsten und Abdeckplan oder Abdeckplanen umfasst. Außerdem oder alternativ ist eine äußere Teilabdeckung zum Anordnen außen um das Turmsegment herum vorgesehen, die ihrerseits wenigstens eine Abdeckplane und ein Traggerüst aufweist. So kann es gegebenenfalls ausreichend sein, nur mit einer äußeren Teilabdeckvorrichtung auszukommen, wenn die Außentemperatur nicht zu tief ist und die geschützte Position des Raumes in dem ersten Turmsegment eine ausreichend hohe Temperatur dort gewährleisten kann.

In einem weiteren Beispiel weist das wenigstens eine Traggerüst einen ringförmig umlaufenden oberen Tragabschnitt zum Befestigen an dem Turmsegment auf. Davon ausgehend kann das Traggerüst weiter aufgebaut werden, insbesondere können Abhaltestreben zum Abhalten der Abdeckplane angeordnet werden.

Eine Abdeckplane kann aus einem wasserdichten Material bestehen, um gleichzeitig auch einen Regenschutz zu bieten. Andererseits ist eine Abdeckplane hierauf nicht beschränkt, sondern es kommen auch luft- und/oder wasserdurchlässige Materialien in Betracht. Eine hohe Isoliereigenschaft dieser Plane kann vorgesehen sein. Je nach Außentemperatur kann eine dünne Plane ausreichen, die im Wesentlichen eine Luftzirkulation und insbesondere das Entweichen warmer Luft durch Konvektion verhindert oder zumindest minimiert.

Beispielsweise ist ein Heizmittel, insbesondere ein Heizlüfter vorgesehen. Dieser erwärmt die Luft in dem Raum zwischen dem Stoßbereich und Abdeckplane und die Abdeckplane verhindert im Wesentlichen das Entweichen der so erwärmten Luft. Es ist zu wiederholen, dass ein Erwärmen auf Temperaturen kurz über dem Gefrierpunkt oftmals ausreichen kann, um das Aushärten der Ausgleichsmasse zu ermöglichen.

Zum Beispiel weist die Abdeckplane eine lichtabsorbierende Oberfläche auf. Hierdurch kann das Sonnenlicht zusätzlich zum Erwärmen herangezogen werden. Je nach Außentemperatur und Sonneneinstrahlung kann eine solche Erwärmung ausreichen, oder ergänzend wird ein Heizmittel wie bspw. ein Heizlüfter verwendet.

Nachfolgend wird die Erfindung an Hand von Ausführungsbeispielen unter Bezugnahme auf die begleitenden Figuren 1 bis 4 beispielhaft erläutert.

Die Figuren 5 bis 15 zeigen nicht beanspruchte Beispiele, die zum besseren Verständnis aufgezeigt sind.
- Figur 1: zeigt eine Hebevorrichtung in einer perspektivischen Ansicht von unten.
- Figur 2: zeigt die Hebevorrichtung der Figur 1 in einem an einem Turmsegment befestigten Zustand.
- Figur 3: zeigt ein mittels einer Hebevorrichtung angehobenes Turmsegment in einer perspektivischen Darstellung zusammen mit der Hebevorrichtung.
- Figur 4: zeigt eine Tragschlaufe in einer perspektivischen Ansicht.
- Figur 5: zeigt einen Zentrierdorn und eine Zentrierhülse in einer perspektivischen Ansicht.
- Figur 6: zeigt den Zentrierdorn und die Zentrierhülse der Figur 5 in einem teilweise zusammengesetzten Zustand.
- Figur 7: zeigt eine Arbeitsbühnenvorrichtung in einer perspektivischen Ansicht.
- Figur 8: zeigt ein Befestigungselement der Arbeitsbühnenvorrichtung der Figur 7 vor. bzw. nach dem Verbinden mit einer Sicherheitsschiene.
- Figur 9: zeigt das Verbindungselement der Figur 8 in einem mit der Sicherheitsschiene verbundenen Zustand.
- Figur 10: zeigt eine Arbeitsbühnenvorrichtung in einer seitlichen Ansicht.
- Figur 11: zeigt eine Arbeitsbühnenvorrichtung in einer seitlichen, teilweise geschnittenen Ansicht gemäß einer weiteren Ausführungsform.
- Figur 12: zeigt einen Teil einer Arbeitsbühnenvorrichtung in einer Rückansicht zusammen mit einer Turmleiter.
- Figur 13: zeigt eine Auflagevorrichtung zum Halten der Arbeitsbühnenvorrichtung an einer Turmleiter.
- Figur 14: zeigt ein erstes Turmsegment mit einer Wärmvorrichtung in einer perspektivischen Ansicht.
- Figur 15: zeigt einen Teil eines Unterbaus einer Wärmvorrichtung im Inneren eines Turmsegmentes.

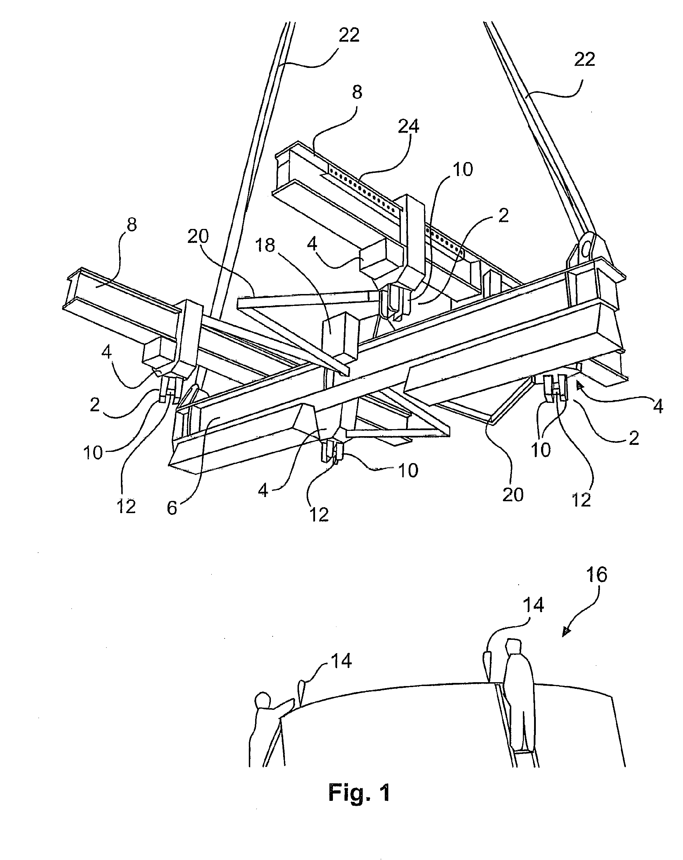

Figur 1 zeigt eine Hebevorrichtung 1 mit vier Befestigungsmitteln 2 zum Befestigen eines Turmsegmentes an der Hebevorrichtung 1. Jedem Befestigungsmittel 2 ist eine Auslösevorrichtung 4 zugeordnet. Die Auslösevorrichtung 4 ist hier als eine Vorrichtung zum Drehen des jeweiligen Befestigungsmittels 2 um jeweils eine im Wesentlichen bestimmungsgemäß senkrechte Drehachse ausgebildet. Die Hebevorrichtung 1 weist einen Mittelträger 6 sowie zwei an dem Mittelträger 6 befestigte Querträger 8 auf. Die Querträger 8 sind an dem Mittelträger 6 in ihrer Position veränderlich befestigt. Die Querträger 8 tragen zudem die Auslösevorrichtungen 4 mit ihrem Befestigungsmitteln 2, wobei die Auslösevorrichtungen 4 ihrerseits an dem jeweiligen Querträger 8 beweglich, nämlich verschiebbar angeordnet sind. Hierdurch kann die Hebevorrichtung 1 an unterschiedliche Turmsegmentgrößen angepasst werden.

Jedes Befestigungsmittel 2 weist zwei Haltestege 10 mit je einem Tragbolzen 12 auf. Zwischen den beiden Haltestegen 10 eines Befestigungsmittels 2 sollen stimmungsgemäß eine Tragschlaufe 14 eines Turmsegmentes 16 so aufgenommen werden, dass der Tragbolzen 12 durch die Tragschlaufe 14 reicht und diese dadurch trägt.

Jede Auslösevorrichtung 4 umfasst einen Elektromotor, der dazu vorbereitet ist, dass Befestigungsmittel um eine im Wesentlichen senkrechte Achse zu drehen, um dadurch eine zwischen den Haltestegen 10 aufgenommene Tragschlaufe 14 ebenfalls zu drehen um dadurch ein Herausschrauben der jeweiligen Tragschlaufe 14 aus dem Turmsegment 16 zu erreichen.

Zum Steuern der Auslösevorrichtungen 4 ist eine Auslösesteuerung 18 vorgesehen die über Verbindungsarme 20 mit den jeweiligen Auslösevorrichtungen 4 verbunden ist, um diese anzusteuern.

Die Hebevorrichtung 1 wird an Tragseilen 22 von einem Kran gehoben. Die jeweilige Auslösevorrichtung 4 dient gleichzeitig zum Halten des betreffenden Befestigungsmittels 2, und die Auslösevorrichtung 4 ist mittels jeweils einer Arretierschiene 24 an dem jeweiligen Querträger 8 in vorbestimmten Positionen arretierbar, die an die Größe des jeweils zu hebenden Formsegmentes 16 angepasst sind.

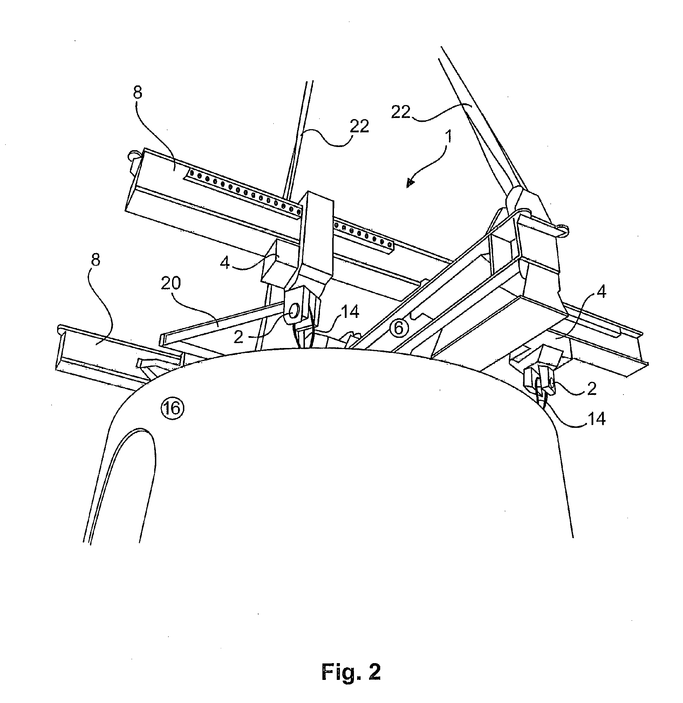

Figur 2 zeigt die Hebevorrichtung 1 in einem mit dem Turmsegment 16 verbundenen Zustand, wobei die Verbindung durch die Befestigungsmittel 2 über vier Tragschlaufen 14 erfolgt, von denen in der Ansicht der Figur 2 nur zwei ansatzweise zu erkennen sind. Die Tragschlaufen 14 sind in das Turmsegment 16 von oben in einer oberen Ansatzfläche eingeschraubt. Nach dem das Turmsegment 16 an seinem bestimmungsgemäßen Platz - im vorliegenden Beispiel auf dem Fundament - abgesetzt ist und die Hebevorrichtung 1 so weit abgesenkt wurde, dass die Tragschlaufen 14 keine nennenswerte Zugspannung mehr aufnehmen müssen, im wesentlichen also unbelastet sind, dreht die jeweilige Auslösevorrichtung 4 das Befestigungsmittel 2 um dadurch die entsprechende Tragschlaufe 14 zu drehen und dadurch aus dem Turmsegment herauszuschrauben.

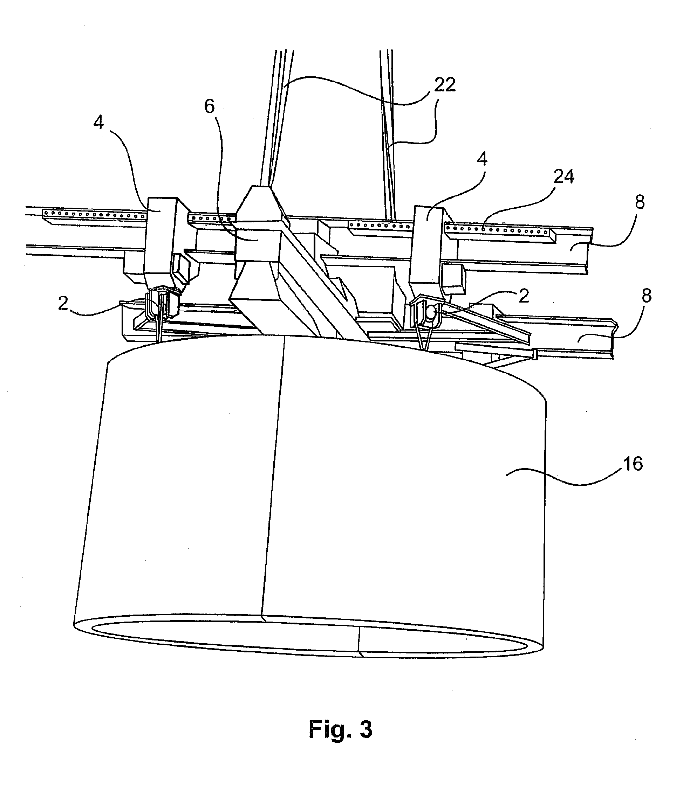

Figur 3 zeigt die Hebevorrichtung 1 mit einem daran befestigten Turmsegment 16 in schwebendem Zustand und in einer perspektivischen Gesamtansicht.

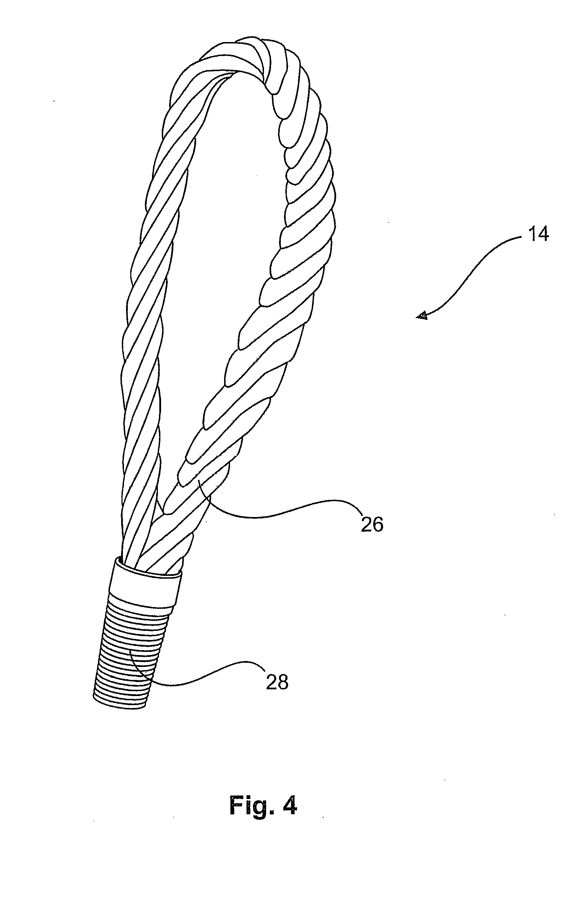

Die in Figur 4 genauer gezeigte Tragschlaufe 14 weist einen Schlaufenabschnitt 26 und einen Gewindeabschnitt 28 auf. Der Gewindeabschnitt 28 ist zum Einschrauben in ein entsprechendes Gegengewinde in dem Turmsegment 16 vorbereitet. Ein Turmsegment 16 kann somit wie in der Figur 1 angedeutet zum Heben mit einer Hebevorrichtung 1 vorbereitet werden. Hierzu sind die Tragschlaufen 14 in das Turmsegment 16 eingeschraubt und stehen nach oben hervor. Zum Tragen werden die Tragschlaufen 14 mit der entsprechenden Befestigungsmitteln 2 verbunden und können gehoben werden, wie in Figur 3 angedeutet ist. Nach dem Absetzen wird jedoch nicht das Befestigungsmittel von der Tragschlaufe 14 gelöst sondern das Befestigungsmittel 2 durch die Auslösevorrichtung 4 gedreht, wodurch die Tragschlaufen 14 mit gedreht werden und dadurch aus dem Turmsegment 16 gelöst werden können. Das Turmsegment 16 verbleibt so an seinem bestimmungsgemäßen Aufstellungsort, wobei die Tragschlaufen 14 bereits entfernt sind und das nächste Turmsegment auf dem zuletzt aufgestellten Turmsegment aufgesetzt werden kann.

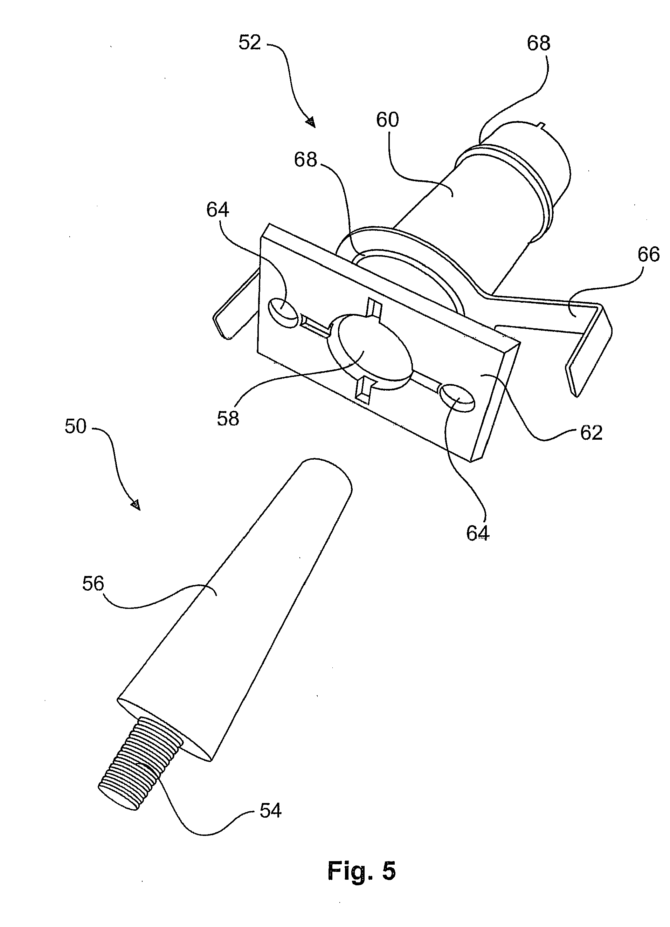

Figur 5 zeigt einen Zentrierdorn 50 und eine Zentrierhülse 52. Der Zentrierdorn 50 weist einen Befestigungsabschnitt 54 und einen Führungsabschnitt 56 auf. Der Befestigungsabschnitt 54 ist im Wesentlichen als Gewindestift ausgebildet und trägt den Führungsabschnitt 56, der konisch ausgebildet ist und sich von einer zum Befestigungsabschnitt 54 abweisenden Seite hin verjüngt. Der Führungsabschnitt 56 ist dabei in etwa kegelförmig ausgestaltet.

Die Zentrierhülse 52 zeigt eine Öffnung 58, durch die der Führungsabschnitt 56 des Zentrierdorns 50 in einen Hohlraum in der Zentrierhülse 52 eingeführt werden kann. In der Figur 5 ist von der Zentrierhülse 52 im Wesentlichen auch eine Außenkontur 60 zu erkennen, die im Grunde auch die Form einer Innenkontur des Hohlraums andeutet.

Die Zentrierhülse 52 ist dazu vorgesehen, in einem Turmsegment aus Beton bei dessen Herstellung mit einbetoniert zu werden, so dass im Wesentlichen die Öffnung 58 und zudem die Positionierungsplatte 62 an einer unteren Stoßfläche des Turmsegmentes noch zugänglich ist. Zum Einbetonieren weist die Positionierungsplatte 62 zwei Positionierungsausnehmungen 64 auf. Vor dem Einbetonieren wird die Zentrierhülse 52 mit der Positionierungsplatte 62 nach unten weisend auf eine ebene Fläche aufgesetzt, auf der auch eine Form zum Gießen des Turmsegmentes angeordnet wird. Auf dieser ebenen Flächen bzw. Platte sind für jede Zentrierhülse 52 jeweils zwei Zentriernasen vorgesehen, die jeweils in die Positionierungsausnehmungen 64 eingreifen und die Zentrierhülse 52 somit exakt positionieren. Die Positionierungsplatte 62 erreicht dabei eine möglichst genaue senkrechte Ausrichtung der zentrierhülse 52, insbesondere bezogen auf die Außenkontur 60, die den Hohlraum aufnimmt.

Zum Halten der Zentrierhülse 52 in dem Beton ist ein Halteblech 66 vorgesehen, der auch als Haltebügel bezeichnet werden kann und insbesondere die Zentrierhülse beim Vergießen des Beton in Position hält. Zudem unterstützen auch die umlaufenden abgerundeten Außenstege 68 eine guten Halt in dem Beton.

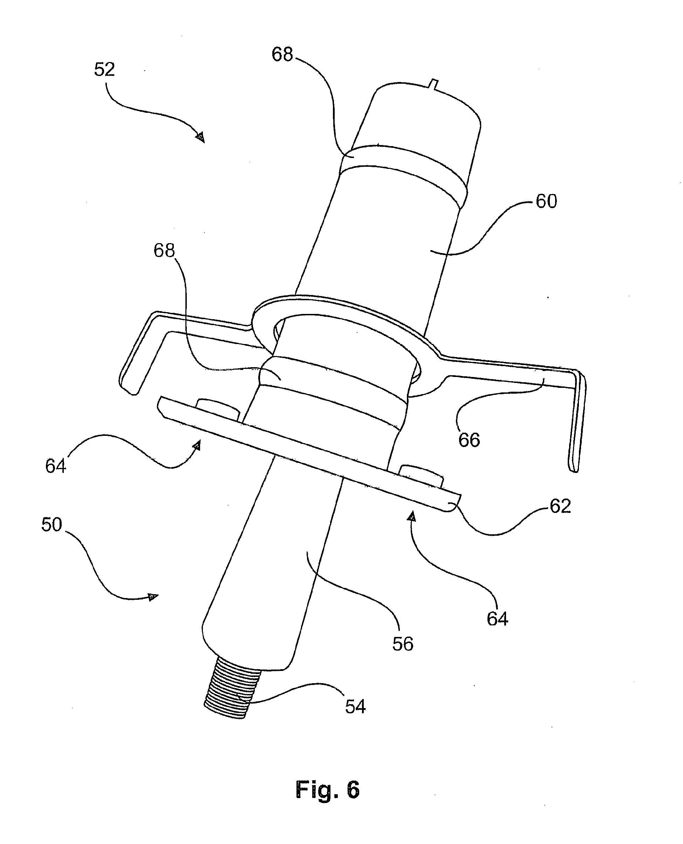

Figur 6 zeigt den Zentrierdorn 50 in einem teilweise in die Zentrierhülse 52 eingesetzten Zustand, zur Veranschaulichung. Im Gebrauch wird der Zentrierdorn 50, nämlich der Führungsabschnitt 56 erst beim Aufeinandersetzen zweier Turmsegmente in die Zentrierhülse 52 eingeführt, die dabei bereits in einen der beiden Turmsegment einbetoniert ist.

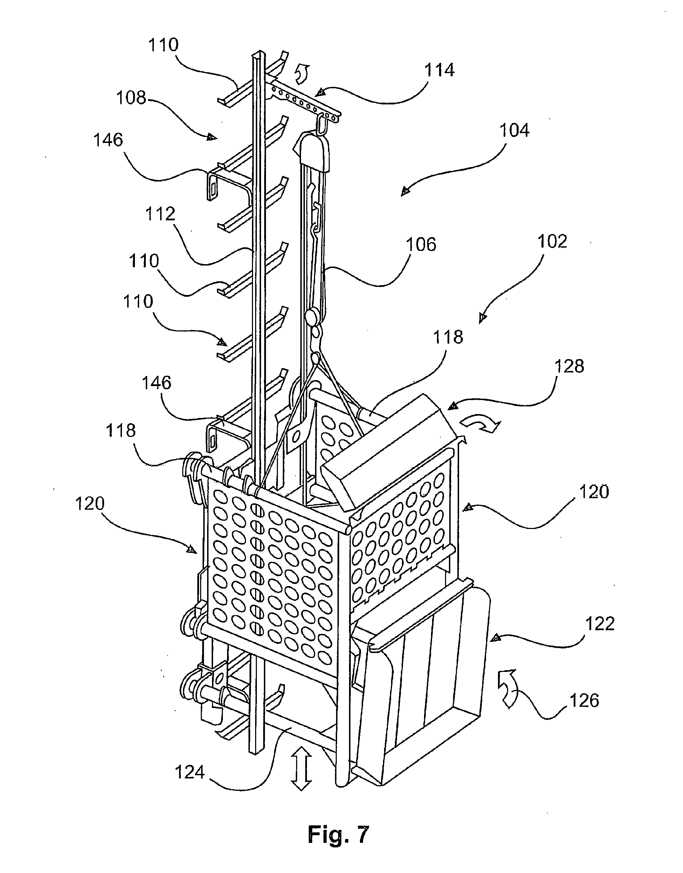

Die Arbeitsbühnenvorrichtung 100 der Figur 7 umfasst einen Arbeitskorb 102 und ein Hebemittel 104, das einen Flaschenzug 106 aufweist. Die Arbeitsbühnenvorrichtung 100 ist dabei an einer Turmleiter 108 befestigt, die mit Leitersprossen 110 und einer Sicherheitsschiene 112 versehen ist. Das Hebemittel 104 weist hierfür einen Lastarm 114 auf, der mittels eines Befestigungsabschnitts 116 an der Sicherheitsschiene 112 verschiebungssicher befestigt ist. An dem Lastarm 14 ist der Flaschenzug 106 befestigt und zudem ist er an dem Arbeitskorb 102 befestigt, der somit mittels des Flaschenzuges in eine höhere Position gezogen werden kann.

Der Arbeitskorb 102 ist ebenfalls an der Turmleiter 108 verschiebungssicher in einer Arbeitsposition befestigt. Der Flaschenzug 106 bzw. das Hebemittel 104 insgesamt soll den Arbeitskorb 102 nur beim Versetzen desselben in eine höhere Position halten und heben. Damit soll das Hebemittel 104 den Arbeitskorb 102 somit auch im Wesentlichen nur in unbelastetem Zustand, also ohne Arbeitspersonal halten und heben.

Der Arbeitskorb 102 weist ein Geländer 118 mit diversen Anschlagpunkten zum Befestigen des Flaschenzuges 106 zum Heben des Arbeitskorbs 102 auf. Das Geländer 118 ist ansonsten dazu vorgesehen, ein Herausfallen einer Person aus dem Arbeitskorb 102 zu verhindern. Dies wird durch einige Schutzwände 120 unterstützt.

Der Arbeitskorb 102 weist zudem eine klappbare Plattform 122 auf, die als Boden bzw. Bodenabschnitt des Arbeitskorbs 102 dient. In der Figur 7 ist die Plattform 122 in einer zur Seite geklappten Position dargestellt, in der eine Person den Arbeitskorb 102 nach unten verlassen kann. Hierfür gibt die weggeklappte Plattform 122 eine entsprechende Bodenöffnung 124 frei. Die Klapprichtung der Plattform ist durch den Pfeil 126 angedeutet. Weiterhin ist ein schwenkbarer Werkzeugkasten 128 vorgesehen, der bei Bedarf in den Arbeitskorb 102 hinein oder aus ihm heraus geschwenkt werden kann. Gegebenenfalls kann es aus Platzgründen sinnvoll sein, beim Verändern der Position des Arbeitskorbs 102 mittels des Hebemittels 104 den Werkzeugkasten 128 in den Arbeitskorb 102 hinein zu schwenken, Während Arbeiten in dem Arbeitskorb 102 bzw. aus dem Arbeitskorb 102 heraus geführt werden, kann ein Verschwenken des Werkzeugkastens 128 in eine Position außerhalb des Arbeitskorbes 102 in dem Arbeitskorb 102 zusätzlichen Platz schaffen.

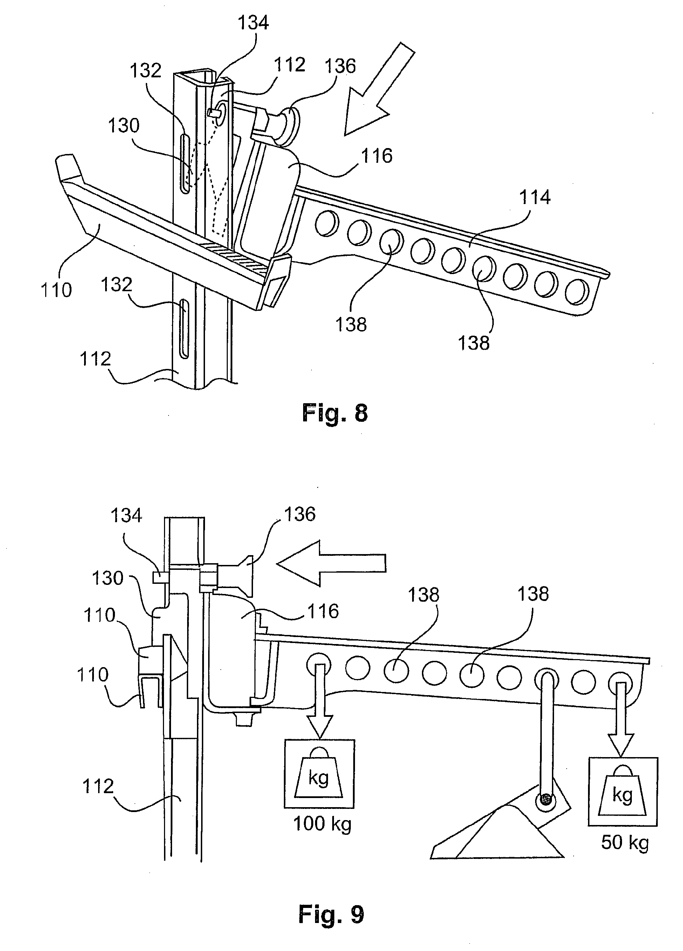

Figur 8 veranschaulicht die Befestigung des Lastarms 114 an der Sicherheitsschiene 112. Der Lastarm 114 wird dabei mittels des Befestigungsabschnittes 116 an der Sicherheitsschiene 112 befestigt. Hierzu weist der Befestigungsabschnitt 116 einen Befestigungshaken 130 auf, der dazu vorgesehen ist, in eine längliche Öffnung 132 einzugreifen, die auch als Langloch bezeichnet werden kann und an der Rückseite der Sicherheitsschiene 112 angeordnet ist. Zum Befestigen wird der Lastarm 114 mit seinem Befestigungsabschnitt 116 und dem Befestigungshaken 130 leicht schräg in die Sicherheitsschiene 112, die als sogenanntes C-Profil ausgeführt ist, eingeführt und etwas nach unten in ihre befestigte Position geschoben. Zum Verhindern des Wiederlösens ist ein Rastbolzen 134 vorgesehen, der in der befestigten Position in dasselbe Langloch 132 eingreift wie der Befestigungshaken 130. Die vollständig eingesetzte Position wird in der Figur 9 in einer Seitenansicht verdeutlicht.

Um den Lastarm 114 wieder aus der Sicherheitsschiene 112 zu lösen, müsste der Rastbolzen 134 manuell an seinem Betätigungskopf 136 durch Ziehen gelöst werden. Die Figur 9 veranschaulicht zudem, dass in dem Lastarm 114 mehrere Befestigungsbohrungen 138 vorgesehen sind, die verschiedene Befestigungspositionen für den Flaschenzug 106 des Hebemittels 104 vorsehen. Unterschiedliche Befestigungsbohrungen 138 können unterschiedliche Gewichte aufnehmen. Zudem kann durch eine geschickte Wahl der Befestigungsbohrung 138 eine günstige Zugrichtung beim Heben des Arbeitskorbes 102 gewählt werden.

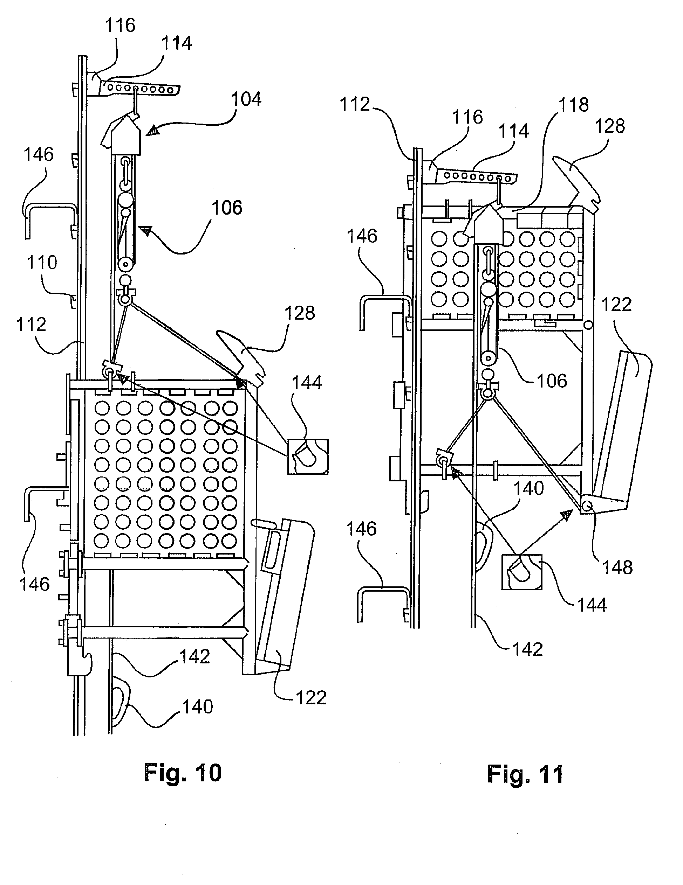

Figur 10 zeigt im Grunde eine Seitenansicht der Situation der Figur 7. Es ist hierbei zudem zu erkennen, dass ein Betätigungsabschnitt 140 an einem Seil 142 des Flaschenzuges 106 befestigt ist, wobei das Seil 142 von einer Position oberhalb des Arbeitskorbs 102 durch den Arbeitskorb 102 hindurch an eine Position unterhalb des Arbeitskorbes 102 reicht. Entsprechend kann der Arbeitskorb 102 von einer Position aus, die unterhalb dieses Arbeitskorbes 102 liegt, in eine höhere Position gezogen und damit gehoben werden. Der Arbeitskorb 102 wird hierbei durch seitliche Führungswangen geführt. Zum Befestigen an dem Arbeitskorb 102, insbesondere an dem Geländer 118 kann das Hebemittel 104 entsprechende gesicherte Haken 144 vorsehen, die auch allgemein als Karabinerhaken bezeichnet werden können. Ein solcher gesicherter Haken 144 ist in der Figur 10 und auch in der Figur 11 beispielhaft in einer Vergrößerung dargestellt. Im Übrigen sind in den Figuren 8, 10 und 11 auch Leiterhalterungen 146 dargestellt, mittels derer die Turmleiter 108 einschließlich Sicherheitsschiene 112 an einer Turminnenwand befestigt wird, wobei diese Leiterhalterung 146 auch zu einem Abstand zwischen der Turmleiter 108 und der betreffenden Turmwand führt.

Figur 11 zeigt eine Situation ähnlich der in Figur 10 dargestellten, wobei der Flaschenzug 106 mit seinen gesicherten Haken 144 an anderen Positionen des Arbeitskorbes 102 befestigt ist. Demnach ist keine Befestigung an dem Geländer 118 gemäß Figur 10 vorgesehen, sondern eine Befestigung an einer Schwenkachse 148, um die Plattform 122 zu schwenken ist und an weiteren Haltestreben 150 des Arbeitskorbes 102. Die Verwendung der Schwenkachse 148 und der Haltestreben 150 zum Anschlag der gesicherten Haken 144 schafft die Möglichkeit, den Arbeitskorb 102 näher an den Lastarm 114 heran zu ziehen. Dies ist besonders dann wichtig, wenn der Arbeitskorb 102 besonders hoch in dem Turm und insbesondere dem obersten gerade zu bearbeitenden Turmsegment gehoben werden soll. Gerade beim Aufbau eines Turmes aus diversen Segmenten kann es vorteilhaft sein, den Arbeitskorb 102 möglichst hoch in dem Turmsegment zu ziehen, um eine bessere Arbeitsposition beim Aufsetzen eines weiteren Turmsegments zu haben. Die Figur 11 zeigt dabei den Arbeitskorb 102 in einer teilweise geschnittenen Ansicht. Der Flaschenzug 106 ist nämlich gemäß der Situation der Figur 11 in dem Arbeitskorb 102 angeordnet und somit erst durch die geschnittene Darstellung erkennbar.

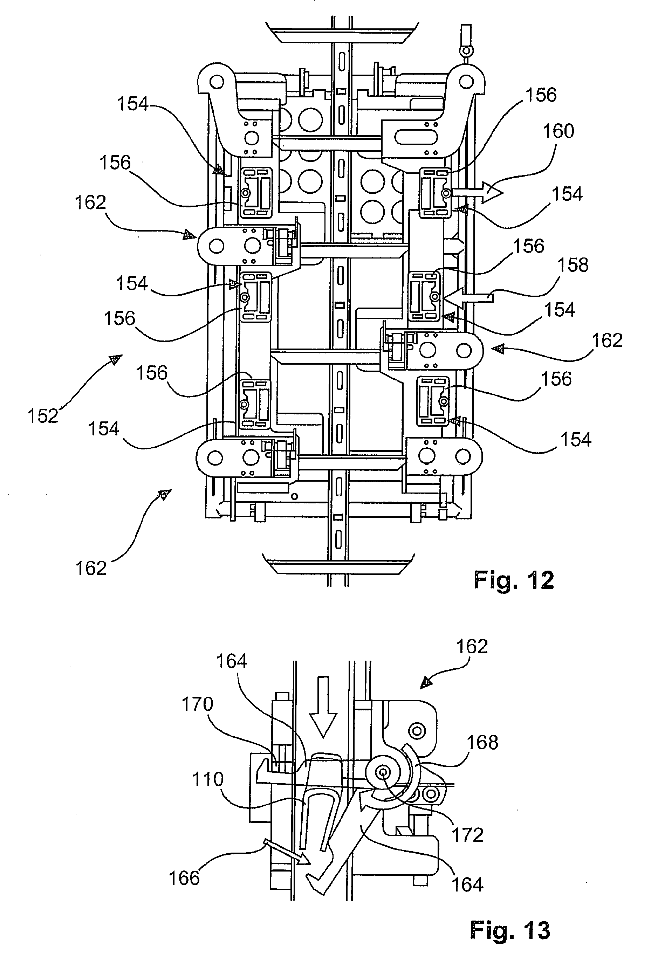

Figur 12 zeigt den Arbeitskorb 102 aus einer Rückansicht, nämlich im Grunde aus Sicht der Turmwand an der die Turmleiter 108 befestigt ist. Figur 12 zeigt somit einen Blick auf eine Korbrückseite 152, die eine Reihe von Befestigungsmitteln aufweist. Der Arbeitskorb ist mittels sechs Verbindungsmitteln 154 an der Korbrückseite 152 befestigt. Jedes Verbindungsmittel 154 umfasst dabei einen Verriegelungsschieber 156, mit dem die Verbindung zwischen Arbeitskorb 102 und Korbrückseite 152 vorgenommen wird. Der Pfeil 158 veranschaulicht dabei eine Bewegung zum Verriegeln und der Pfeil 160 eine Bewegung zum Entriegeln.

Zudem sind drei Auflagehalterungen 162 vorgesehen, die den Arbeitskorb durch Auflage auf jeweils einer Leitersprosse 110 in der Höhe positionieren.

In der Detailansicht der Figur 13 ist eine Auflagehalterung 162 in einer Seitenansicht dargestellt. Die Auflagehalterung weist einen Auflagehebel 164 auf, der in der Figur 13 in zwei Positionen dargestellt ist, nämlich in einer waagerechten Ruheposition und einer schrägen, ausweichenden Position. Der Pfeil 166 deutet auf eine ausweichende Bewegung in die ausgewichene Position. Wird der Arbeitskorb nach oben gezogen und passiert dabei die Auflagehalterung 162 eine Leitersprosse 110, so wird durch diese Aufwärtsbewegung des Arbeitskorbes 102 und damit der Auflagehalterung 162 die Leitersprosse 110 den Auflagehebel 164 in die Ausweichbewegung 160 schieben. Wird die Aufwärtsbewegung fortgesetzt und verlässt dabei die Leitersprosse 110 den Kontaktbereich mit dem Auflagehebel 164, so schwenkt dieser Auflagehebel 164 in der Schwenkbewegung gemäß dem Pfeil 168 zurück. Dabei schlägt der Auflagehebel 164 gegen einen Anschlag 170. Hierzu ist eine Feder im Bereich der Schwenkachse 172 des Auflagehebels 164 angeordnet, die in den Figuren jedoch nicht dargestellt ist.

Wird der Arbeitskorb 102 nun wieder leicht abgesenkt, so kommt der Auflagehebel 164 auf der betreffenden Leitersprosse 110 zu liegen und hält den Arbeitskorb 102. Absenkbewegung wird mit dem Pfeil 174 veranschaulicht.

Soll er Arbeitskorb 102 weiter abgesenkt werden, so muss ein Zurückschwenken des Auflagehebels 164 durch eine entsprechend vorgesehene Blockiervorrichtung verhindert werden. Eine solche Blockiervorrichtung ist vorhanden, wird in den Figuren jedoch nicht veranschaulicht.

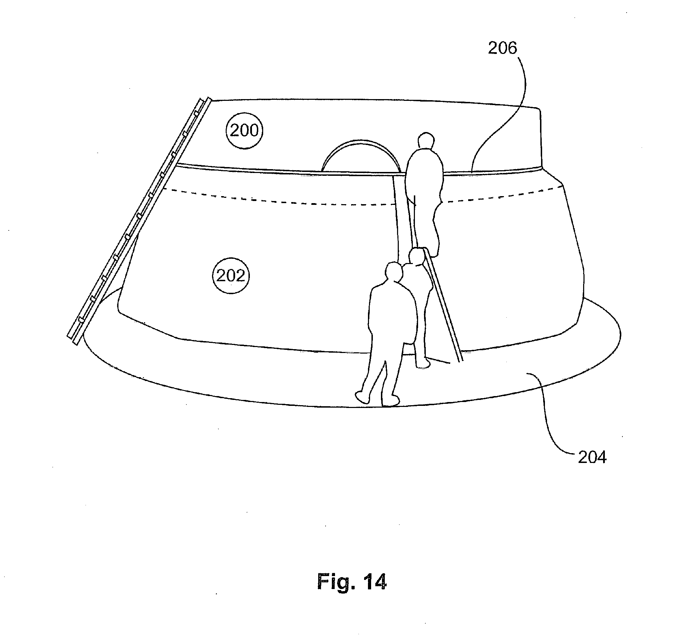

In der Figur 14 ist perspektivisch ein erstes auf einem Fundament aufgesetztes Turmsegment 200 dargestellt, um das herum eine Wärmvorrichtung mit einer äußeren Teilabdeckvorrichtung 202 dargestellt ist. Diese äußere Teilabdeckvorrichtung 202 umschließt den somit nicht erkennbaren Stoßbereich zwischen dem Turmsegment 200 und dem Fundament 204. Dabei schafft diese äußere Teilabdeckvorrichtung 202 einen geschützten Raum um das Turmsegment 200 herum, der in Höhe und Breite für erwachsene Personen ohne weiteres begehbar ist. Zur Veranschaulichung sind schematisch Personen angedeutet.

Die äußere Teilabdeckvorrichtung 202 ist an einer oberen, umlaufenden Schiene 206 an dem Turmsegment 200 befestigt und dichtet im Wesentlichen gegen das erste Turmsegment ab. Eine solche Abdichtung sollte dabei im Wesentlichen verhindern, dass Wärme durch Konvektion entweicht. Weiterhin ist ein Gerüst unterhalb der äußeren Teilabdeckvorrichtung 202 angeordnet, das auch mit dieser umlaufenden oberen Schiene verbunden ist und im Wesentlichen die äußere Form der äußeren Teilabdeckungsvorrichtung 202 bestimmt.

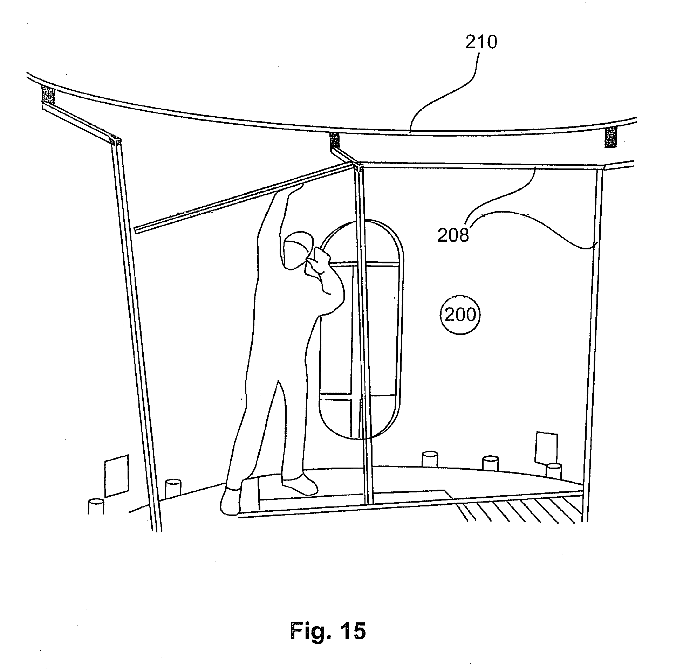

Figur 15 zeigt einen Teil eines Traggerüstes 208 einer noch fertig zu stellenden inneren Teilabdeckvorrichtung. Entsprechend zeigt Figur 15 den Innenraum des Turmsegmentes 200. Auch das innere Traggerüst 208 weist eine umlaufende Schiene, nämlich innere Umlaufschiene 210 auf. Auch in der Darstellung der Figur 15 ist eine Person skizziert, um die Größe des Traggerüstes 208 und damit der vorzusehenden inneren Teilabdeckvorrichtung zu veranschaulichen. Im Übrigen ist das Traggerüst 208, das im Wesentlichen zum Abspannen einer Abdeckplane vorgesehen ist, zum Halten des Traggerüstes 208 mit diesem verbunden.

## Patentansprüche

1. Hebevorrichtung (1), insbesondere Traverse, zum Heben eines ersten Turmsegmentes (16) eines Betonturms einer Windenergieanlage mittels eines Krans, umfassend:
- wenigstens ein Befestigungsmittel (2) zum Befestigen des Turmsegmentes (16) an der Hebevorrichtung (1) und
- wenigstens eine Auslösevorrichtung (4) zum Lösen einer Verbindung zwischen der Hebevorrichtung (1) und dem Turmsegment (16),
**dadurch gekennzeichnet, dass** die bzw. jede Auslösevorrichtung (4) einen Elektromotor aufweist, um das Lösen der Verbindung zwischen der Hebevorrichtung (1) und dem ersten Turmsegment (16) auszuführen.

2. Hebevorrichtung (1) nach Anspruch 1, dazu vorbereitet, die Verbindung zwischen der Hebevorrichtung (1) und dem ersten Turmsegment (16) so rückstandsfrei zu lösen, dass auf dem Turmsegment (16) ein zweites Turmsegment (16) bestimmungsgemäß angeordnet werden kann.

3. Hebevorrichtung (1) nach Anspruch 1 oder 2,
wobei die Auslösevorrichtung (4) dazu vorbereitet ist, ein Verbindungselement, insbesondere eine in das erste Turmsegment (16) eingeschraubte Öse oder Stahlseilschlaufe, aus dem Turmsegment (16) zu lösen, insbesondere herauszuschrauben.

4. Hebevorrichtung (1) nach Anspruch 3, **dadurch gekennzeichnet, dass** jedes Befestigungsmittel (2) dazu vorbereitet ist, jeweils mit der Stahlseilschlaufe bzw. einer der Stahlseilschlaufen verbunden zu werden und wobei jedes Befestigungsmittel (2) mit einer der Ablösevorrichtungen versehen ist, um die mit dem jeweiligen Befestigungsmittel (2) verbundene Stahlseilschlaufe aus dem ersten Turmsegment (16) zu schrauben.

5. Hebevorrichtung (1) nach einem der vorstehenden Ansprüche, **dadurch gekennzeichnet, dass** wenigstens 2 Befestigungsmittel (2) vorgesehen sind und/oder dass das bzw. jedes Befestigungselement dazu vorbereitet ist, lösbar mit einer bzw. der Stahlseilschlaufe verbunden zu werden, insbesondere, dass jedes Befestigungselement einen Querbolzenabschnitt oder einen Hakenabschnitt zum Einschieben bzw. Einhaken in eine der Stahlseilschlaufen zum Heben des ersten Turmsegmentes (16) aufweist.

6. Verfahren zum Heben und Absenken eines Turmsegmentes (16) eines Betonturms einer Windenergieanlage umfassend die Schritte:
- Einhaken wenigstens zweier Befestigungsmittel (2) einer Hebevorrichtung (1) eines Krans in jeweils eine in das Turmsegment (16) eingeschraubte Stahlseilschlaufe,
- Anheben des Turmsegments (16) und Absetzen auf einem anderen Turmsegment (16) und
- Herausschrauben jeder Stahlseilschlaufe aus dem Turmsegment (16) mittels einer entsprechenden Auslösevorrichtung (4) der Hebevorrichtung (1),
wobei zum Heben und Absenken eines Turmsegmentes (16) eine Hebevorrichtung (1) nach einem der Ansprüche 1 bis 5 verwendet wird.

## Claims

1. Lifting device (1), in particular a cross-member, for lifting a first tower segment (16) of a concrete tower of a wind turbine by means of a crane, comprising:
- at least one securing means (2) for securing the tower segment (16) to the lifting device (1) and
- at least one release device (4) for releasing a connection between the lifting device (1) and the tower segment (16), **characterised in that** the or each release device (4) has an electric motor in order to carry out the release of the connection between the lifting device (1) and the first tower segment (16).

2. Lifting device (1) according to claim 1, which is provided to release the connection between the lifting device (1) and the first tower segment (16) in such a residue-free manner that a second tower segment (16) can be arranged according to provisions on the tower segment (16).

3. Lifting device (1) according to claim 1 or claim 2, wherein the release device (4) is provided to release, in particular unscrew, from the tower segment (16) a connection element, in particular a lug or steel cable loop which is screwed into the first tower segment (16).

4. Lifting device (1) according to claim 3, **characterised in that** each securing means (2) is provided to be connected to the steel cable loop or one of the steel cable loops, respectively, and each securing means (2) being provided with one of the release devices in order to screw the steel cable loop which is connected to the respective securing means (2) from the first tower segment (16).

5. Lifting device (1) according to any one of the preceding claims, **characterised in that** at least 2 securing means (2) are provided and/or **in that** the or each securing element is provided to be releasably connected to a or to the steel cable loop, in particular **in that** each securing element has a transverse pin portion or a hook portion for inserting or hooking into one of the steel cable loops for lifting the first tower segment (16).

6. Method for lifting and lowering a tower segment (16) of a concrete tower of a wind turbine comprising the steps of:
- hooking at least two securing means (2) of a lifting device (1) of a crane in a steel cable loop which is screwed into the tower segment (16),
- lifting the tower segment (16) and placing on another tower segment (16) and
- screwing each steel cable loop out of the tower segment (16) by means of a corresponding release device (4) of the lifting device (1),
wherein a lifting device (1) according to any one of claims 1 to 5 is used for lifting and lowering a tower segment (16).

## Revendications

1. Dispositif de levage (1), en particulier traverse, pour soulever un premier segment de mât (16) d'un mât de béton d'une éolienne au moyen d'une grue, comprenant:
- au moins un moyen de fixation (2) pour fixer le segment de mât (16) au dispositif de levage (1) et
- au moins un dispositif de déverrouillage (4) pour débloquer une liaison entre le dispositif de levage (1) et le segment de mât (16),
**caractérisé en ce que** chaque dispositif de déverrouillage (4) comprend un électromoteur, pour effectuer le déblocage de la liaison entre le dispositif de levage (1) et le premier segment de mât (16).

2. Dispositif de levage (1) selon la revendication 1, disposé pour débloquer totalement la liaison entre le dispositif de levage (1) et le premier segment de mât (16), de sorte qu'un deuxième segment de mât (16) peut être agencé sur le premier segment de mât (16) conformément à sa destination.

3. Dispositif de levage (1) selon la revendication 1 ou 2, dans lequel le dispositif de déverrouillage (4) est disposé de manière à débloquer, en particulier dévisser, un élément de liaison du premier segment de mât (16), en particulier un oeillet ou une élingue en acier vissé au premier segment de mât (16).

4. Dispositif de levage (1) selon la revendication 3, **caractérisé en ce que** chaque moyen de fixation (2) est disposé de manière à être connecté respectivement avec l'élingue en acier, ou l'une des élingues en acier, et dans lequel chaque moyen de fixation (2) est pourvu de l'un des dispositifs de séparation afin de visser l'élingue en acier liée au moyen de fixation (2) respectif au premier segment de mât (16).

5. Dispositif de levage (1) selon l'une quelconque des revendications précédentes, **caractérisé en ce que** au moins deux moyens de fixation (2) sont prévus et/ou que le ou chaque élément de fixation est disposé pour être relié de manière amovible à une ou l'élingue en acier, et notamment **en ce que** chaque élément de fixation comprend un segment de boulon transversal et un segment de crochet pour l'insertion ou l'accrochage dans l'une des élingues en acier pour soulever le premier segment de mât (16).

6. Procédé pour le levage et la descente d'un segment de mât (16) d'un mât en béton d'une éolienne comprenant les étapes de:
- l'accrochage d'au moins deux moyens de fixation (2) d'un dispositif de levage (1) d'une grue, dans respectivement une élingue en acier vissée dans le segment de mât (16)
- le levage du segment de mât (16) et la descente sur un autre segment de mât (16) et
- le dévissage de chaque élingue en acier du segment de mât (16) au moyen d'un dispositif de déverrouillage (4) correspondant du dispositif de levage,
dans lequel un dispositif de levage (1) selon les revendications 1 à 5 est utilisé pour le levage et la descente d'un segment de mât (16).
